# EUROPEAN PATENT APPLICATION

(11) **EP 1 304 570 A1**
(43) Date of publication of application: **23.04.2003**
(21) Application number: 01308943.8
(22) Date of filing: 22.10.2001
(51) Int. Cl.: G01N 33/487, G01N 27/30

(54) **Electrochemical electrode test strip and process for preparation thereof**

(71) Applicant: Bioptik Technology, Inc., Hsinchu, Taiwan 300 (CN)
(72) Inventor: Lee, Chih-hui, c/o Bioptik Technology Inc., Hsinchu, Taiwan300 (CN)
(74) Representative: Nicholls, Michael John

(57) **Abstract**

As embodied and broadly described herein, the invention provides an electrode test strip. The electrochemical electrode test strip comprises an insulating base plate, an electrode system on the base plate, a spacer which partially covers the electrode system and a channel trench with a constant width is formed thereof, a reactive film, and a cover on the spacer with an first opening thereof, wherein the electrode system comprises at least a working electrode and a reference electrode, and the working electrode and the reference electrode is isolated. The reactive film contains at least one active species that can have a specific redox reaction with the analyte. The first opening exposes the channel trench, and two second openings are located at the two ends of the channel trench.

## Description

### CROSS REFERENCES TO THE RELATED APPLICATIONS

This application claims the priority benefit of Taiwan application serial no.89110763, filed on June 1st, 2000, and the full disclosure of which is incorporated herein by reference.

### BACKGROUND OF THE INVENTION

### Field of Invention

The present invention relates to an electrochemical electrode test strip and a process for preparation thereof. More particularly, the present invention relates to an electrochemical electrode test strip that utilizes a reactive film containing an active species capable of undergoing redox reactions to contact with a sample, and then a specific biochemical or chemical redox reaction occurs to transfer electrons between the active species and the an analyte of the sample.

### Description of Related Art

The electrode test strip is not new in technology. In the present market, electrode test strips are applied to produce various blood glucose test strips that can be used in home. However, there are still some problems existing in the reactive region design for a test strip.

Therefore, the way of adding sample and the required volume of sample often result in contamination or insufficient sample volume, and then lead to errors in measurement. For example, the time for filling sample in the reactive region will be too long due to delay in reaction time. In addition, fingertips touching the reactive region will contaminate the test strip and thus produce errors in the test result. Especially, when a lancet is used to gather blood from the babies and the old, the optimum blood volume is hard to reach so test errors occur. Hence, there is a requirement of a test strip using only a minimal sample volume. The sample volume of below 5 µL is preferred for a siphonal test strip.

Fig. 1 shows a perspective view of a commercialized blood-glucose electrode test strip (US 5120420). This test strip includes an insulating base plate 101 and a two-electrode system 102 formed thereon. A second insulating layer 105 covers the insulating base plate 101, wherein an U-type opening 103 exposes one end of the surface of the two-electrode system 102 and opening 104 exposes another end of the surface of the two-electrode system 102. Electrodes exposed by opening 103 serve as the cathode lead and anode lead. The opening 104 defines a reactive region over the electrodes 102, and the reactive region is covered by a reagent. After the reagent is dried, the mesh 106 completely covers the reactive region. An adhesive tape 107 with a hole 110 attaches to the upper surface of the mesh 106 to secure mesh 106 and protect the reactive region. The hole 110 serves as a sample inlet. Two slits 108 and 109 adjacent to the mesh 106 are used for gas discharge.

However, this type of test strip can only reduce the requirement in sample volume to 9 µL. Besides, the effect of gas discharge of the two slits 108 and 109 is poor.

Fig. 2 shows a perspective view of another commercialized blood-glucose electrode test strip (US 5120420). This test strip includes a base plate 201, leads 202, a working electrode 204, a reference electrode 205, a spacer 206 and a cover 210 formed thereon. The central part of the spacer 206 is cut off to form a U-shaped space 207, which then forms a sample loading space, i.e. a reactive region. The space 207 has a sample inlet 208 and a gas outlet 209.

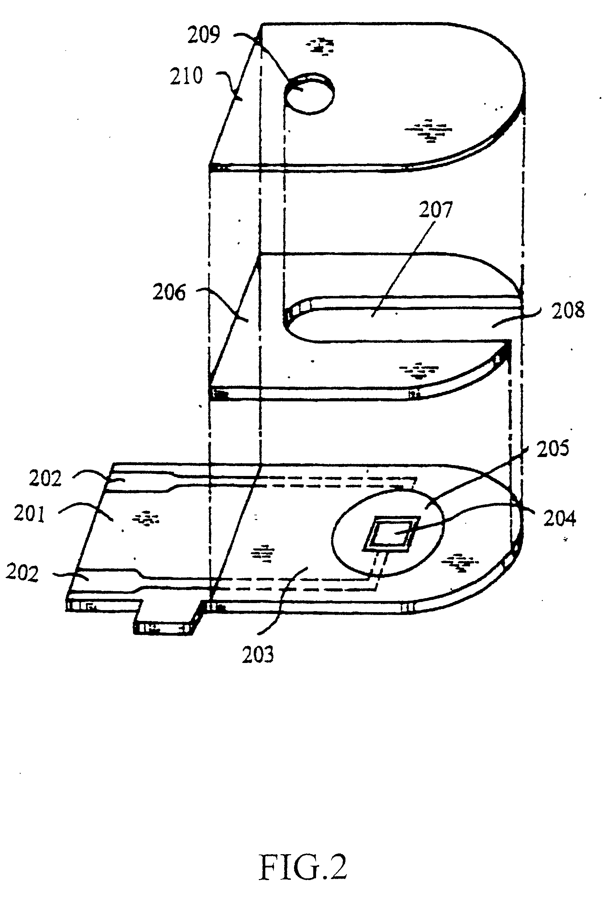

The forming method of a reactive film (not shown in Fig. 2) of the blood-glucose electrode test strip includes the steps as follows. Leads 202 are covered by a carboxymethyl cellulose (CMC) aqueous solution, then the CMC aqueous solution is dried to form a hydrophilic CMC layer. A glucose oxidase (GOD) solution is coated and dried to form a GOD layer thereon. A hydrophilic PVP polymer solution is coated and dried to form a PVP layer thereon. Finally, an electron medium suspension solution is coated and dried thereon to form an electron medium layer. The CMC layer, the GOD layer, the PVP layer and the electron medium layer compose the reactive film on the reactive region.

Since the reactive layer described above is composed of four layers (a CMC layer, a GOD layer, a PVP layer and an electron medium layer), and it is necessary to perform the drying step after the solution of each layer described above is formed, the procedure of producing the reactive layer is very complicated. Besides, a certain period of time is needed for the sample to fill the space 207 and activate the electrodes 204 and 205, and this results in a measurement delay and thus measurement errors.

### SUMMARY OF THE INVENTION

The present invention provides an electrochemical electrode test strip that has three sample inlets. A sample can be introduced from one of these three inlets. The other two inlets can serve as gas outlets. The present invention provides a novel design in the electrochemical electrode test strip which can be operated in a more convenient way.

The present invention also provides a novel electrochemical electrode test strip having one sample inlet and two gas outlets. The time needed for the sample to fill the reactive space is saved to minimize the detecting errors.

The present invention also provides an electrochemical electrode test strip of which the sample volume required is less than 5 µL.

The present invention also provides an electrochemical electrode test strip of which the sample volume required is constant to exclude the possible detecting errors caused by different sample volume.

The present invention also provides a simple method to produce an electrochemical electrode test strip. The method of the present invention simplifies the process of producing a reactive film and thus saves the time for mass-producing the electrochemical electrode test strip.

As embodied and broadly described herein, the present invention provides an electrode test strip. The electrochemical electrode test strip comprises an insulating base plate, an electrode system on the base plate, a spacer which partially covers the electrode system and a channel trench with a constant width formed thereof, a reactive film, and a cover on the spacer with an first opening thereof. The electrode system comprises at least a working electrode and a reference electrode, and the working electrode and the reference electrode are isolated. The reactive film contains at least one active species that is capable of a specific redox reaction with the analyte. The first opening exposes the channel trench, and two second openings are located at the two ends of the channel trench.

This invention also provides a method of manufacturing an electrode test strip comprising the following steps. An insulating base plate is applied first. A layer of conductive films as a cathode or an anode is then printed on the insulating base plate, and the printed cathode and the anode are isolated. A first spacer and a second spacer on the conductive films are formed to expose two ends of the cathode and the anode, wherein a channel trench is formed between the first and the second spacer. A reagent solution is coated on a bottom surface of the channel trench, and then the reagent solution is dried to form a reactive film in the channel trench. The reagent solution contains an active species, a polymer, an electron medium, a nonionic surfactant and a buffer solution. A cover with a first opening is formed on the spacer, wherein the first opening is located on the channel trench and two second openings are surrounded by the insulating base plate, the first spacer, the second spacer and the cover.

According to the present invention, a sample can be loaded from either the first or second openings into the reactive region of the electrochemical electrode test strip. Therefore, the sample can be easily loaded into the reactive region in a much shorter time and can easily cover the reactive film completely, and thus larger redox current can be produced to essentially reduce the errors in measurement. Additionally, the reagent solution can be coated on the reactive region and dried at the same time. This will save much time and cost for manufacturing the electrode test strip.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,

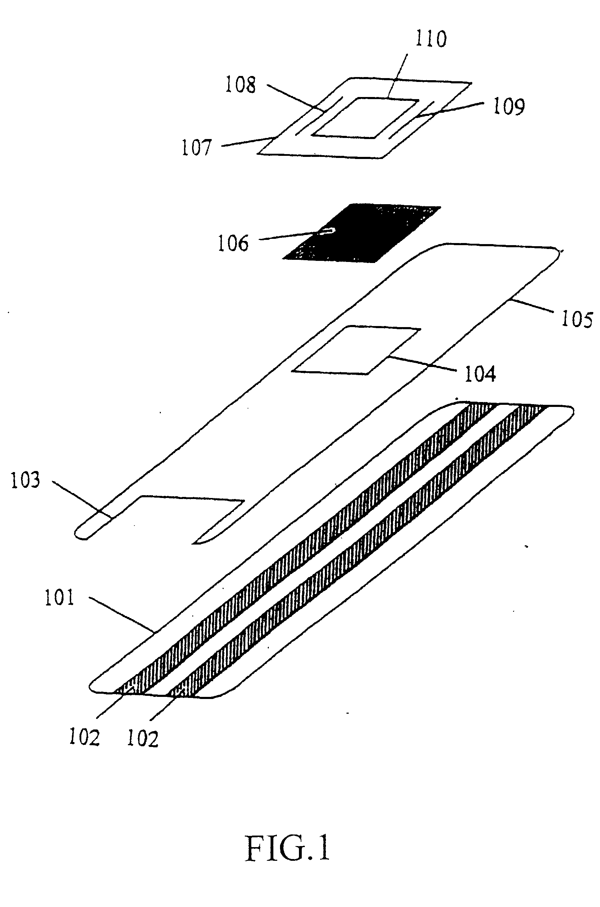

Fig. 1 is a perspective view of a commercialized blood-glucose electrode test strip;
Fig. 2 is a perspective view of another commercialized blood-glucose electrode test strip;
Fig. 3A is a top view of a electrode test strip according to one preferred embodiment of this invention;
Fig. 3B is a front view of the above electrode test strip according to one preferred embodiment of this invention;
Fig. 3C is a side view of the above electrode test strip according to one preferred embodiment of this invention;
Figs. 4A - 4D are the progression of manufacturing steps in forming the above electrochemical electrode test strip according to one preferred embodiment of this invention; and
Fig. 5 is the comparison results between this invention and a bio-analyzer YSI2300 (Yellow Springs Instrument Co. Model 2300).

### DESCRIPTION OF THE PREFERRED EMBODIMENTS

### I. The structure of an electrochemical electrode test strip of this invention

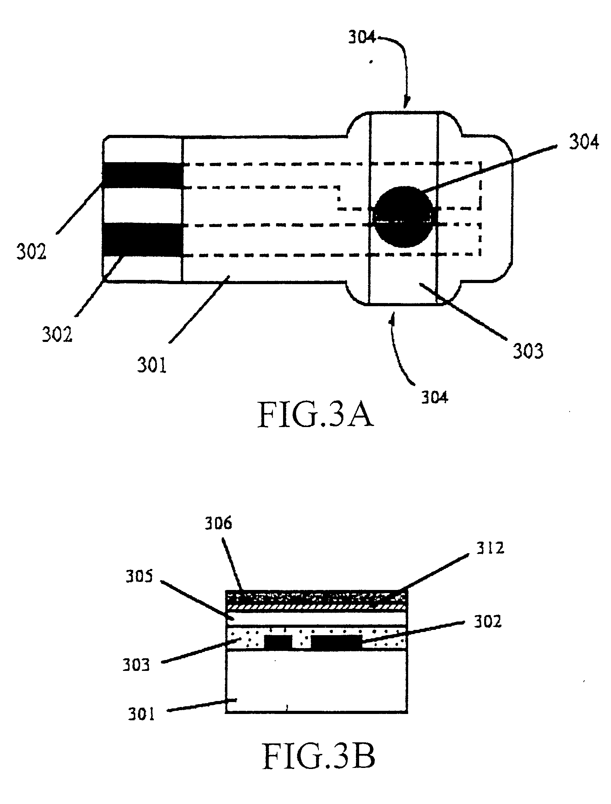

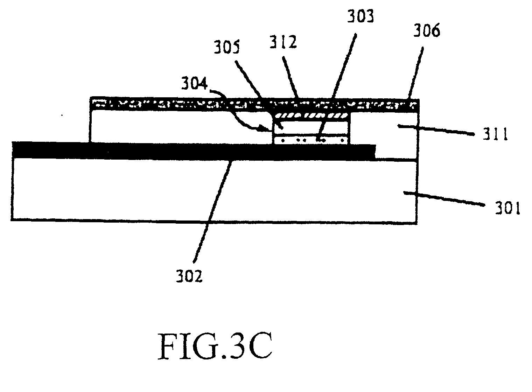

The appearance of an electrochemical electrode test strip, according to one preferred embodiment of the present invention, are individually shown in Figs. 3A - 3C. Figs.3A - 3C show the top, front and side views of the electrochemical electrode test strip, respectively. The structure of the electrochemical electrode test strip comprises a base plate 301, conductive films 302 on the base plate 301, a spacer 311 which partially covers the conductive films 302 and a channel trench with a constant width formed thereof, a reactive film 303 which can react with a sample, and a cover 306 with an opening 313 thereof.

The base plate 301 is preferably flat and straight. In addition, the material of the base plate 301 is preferred to be electrically insulating and heat-resistant up to 60 °C; therefore, the conductive film 302 and the reactive film 303 can be heated to dry thereon. The preferred base plate 301 can be made of, for example, PC plate, polyvinylchloride (PVC) plate, polyethylene terephthalate (PET) plate, glass fiber plate (FR-4), Bakelite ceramics, ceramic plate (CEM-I), glass plate or polyester sulfone plate.

Conductive films 302 comprise at least one isolated cathode part and one isolated anode part. The cathode part is partially covered by the spacer 311, and the two exposed ends are individually a cathode lead 307 and a reference electrode 309. The anode part is also partially covered by the spacer 311, and the two exposed ends are individually an anode lead 308 and a working electrode 310. The area of the working electrode 310 is larger than that of the reference electrode 309. The working electrode 310 and the reference electrode 309 are covered by reactive film 303, which can electrochemically react with a sample to induce an electrical effect. The cathode lead 307 and the anode lead 308 individually connect to amperometric detector.

The spacer 311 partially covers the conductive films 302 and the base plate 301. A strip of the spacer 311 is cut off to form a channel trench, which serves as a reactive region and is used to accommodate a sample here. The channel trench exposes the working electrode 310 and reference electrode 309, and the reactive film 303 is formed in the channel trench to cover the reactive region. The thickness of the spacer 311 is preferably about 0.2 mm or more so that the resistance of the sample covering the reactive film 303 can be reduced.

The reagent solution of the reactive film 303 contains an active species such as an enzyme, a protein or a chemical etc., which can undergo redox reactions and a mixed solution which contains a polymer, an electron medium, a nonionic surfactant and a buffer solution.

The polymer of the reactive film 303 is used for securing the active species and the electron medium. About 1 to 4 wt % of polymer contributes to the reagent solution of the reactive film 303. The polymer can be chosen from PVP (Polyvinyl Pyrrolidone), PEG (Polyethylene Glycol), gelatin, dextran, PVA (polyvinyl alcohol), methylcellulose, carboxymethyl cellulose, albumin, chitin or a combination thereof.

The electron medium of the reactive film 303 plays a role of an electron acceptor or an electron donor in the electrochemical reaction between the active species and an analyte. The voltage, resistance or current variation of the electrochemical reaction can be transferred from the working electrode 310 and reference electrode 309 through conductive film 302 to the anode lead 308 and the cathode lead 307, wherein the anode lead 308 and the cathode lead 307 connect to a detector. When the electrode test strip connects to a detector, the detector supplies a voltage to the electrode test strip by a voltage output device. The electrode test strip also connects to a receiver to receive the voltage, resistance or current variation of the above electrochemical reaction, and a display device converts the signal that receiver receives to the analyte concentration and display it. The electron medium is, for example, potassium ferricyanide. About 1 to 10 wt % of the electron medium contributes to the reagent solution of the reactive film 303.

Another component of the reactive film 303 is a nonionic surfactant, which disperses the active species to cover the hydrophobic reactive region. Less than about 0.3 wt% of the nonionic surfactant contributes to the reagent solution of the reactive film 303. The suitable nonionic surfactant comprises Triton X-100, lecithine, phosphatidyl choline, oleic acid, cyclodextrin, polyoxyethylene glycerine and fatty acid ester.

The buffer solution of the reactive film 303 may be composed of, for example, citric acid, dipotassium phosphate, potassium phosphate, Tris or borate with deionized water. About 83.7 to 98 wt % of the buffer solution contributes to the reagent solution of the reactive film 303. The buffer solution is used for keeping the optimum activity of the active species.

The cover 306 of the electrode test strip prevents the reactive film 303 from contamination, and limits the sample volume in the reactive region. The opening 304 on the cover 306 is located above the reactive region, and two holes 304 are located on the side of the electrode test strip. When one of the three holes 304 serves_as the sample inlet, the other two serve as the gas outlets. This design can reduce the time needed for a sample to fill the reactive region to minimize the measurement errors and offer a more convenient way to operate this electrochemical electrode test strip of the present invention.

Besides, a nitrate fiber film 312 can be used for covering the channel trench. The nitrate fiber film 312 is attached to the bottom surface of the cover 306 and its thickness is less than 0.15 mm. The nitrate fiber film 312 is optional. If the channel trench is covered with the nitrate fiber film 312, the time for a sample completely covering the reactive film 303 can be largely reduced for the hydrophilic nitrate fiber film 312.

### II. The method of preparing the electrochemical electrode test strip of this invention

The present invention provides a manufacture method of an electrochemical electrode test strip and comprises the following steps:
(a) Conductive films cover an insulating base plate to form two separate electrodes in which one of the electrodes serves as a cathode, and another serves as an anode.
(b) An insulating spacer partially covers the conductive films to expose the first end of each electrode and a channel trench with a constant width formed in the spacer to expose the second end of each electrode. The first end of the anode serves as an anode lead, and the second end of the anode serves as a working electrode. Similarly, the first end of the cathode serves as a cathode lead, and the second end of the cathode serves as a reference electrode.
(c) A reactive film is coated on the reactive region in the channel trench by a one-step procedure. The reactive film is composed of an active species and a mixed solution, wherein the mixed solution comprises a polymer, an electron medium, a nonionic surfactant and a buffer solution.
(d) A nitrate fiber film covers the channel trench.
(e) A cover with an opening, which exposes the reactive region and covers the insulating base plate.

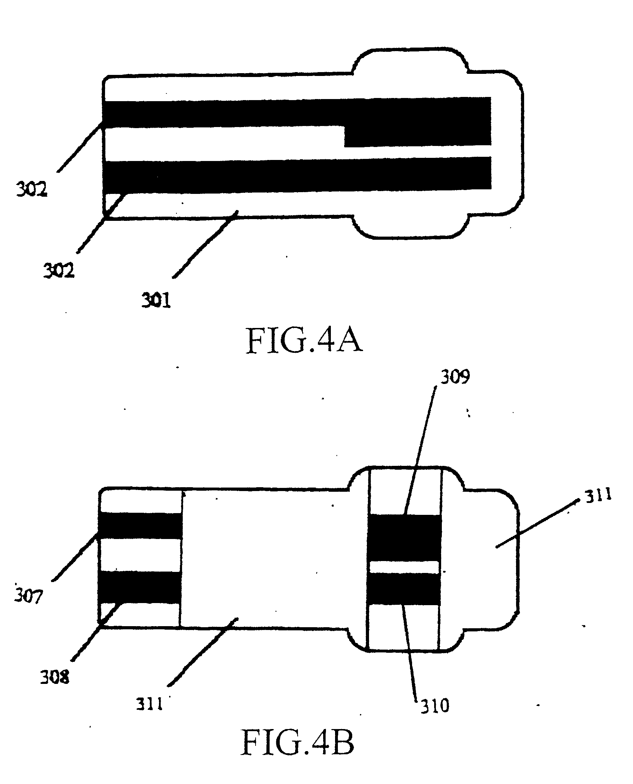

In step (a) and Fig. 4A, a halftone is used to print out a layer of conductive films 302, which individually serves as a cathode and an anode on one surface of the base plate 301. Then a drying step is performed at a temperature of about 60° to about 80° C. The material of the conductive film 302 is preferably carbon glue, silver glue, gold glue, carbon-silver glue, cooper glue, carbon-platinum glue, or a combination thereof, as they are suitable for halftone printing. For example, a combination of materials described above may be a silver-glue, and a carbon-glue which are printed first and next respectively.

In step (b) and Fig. 4B, the insulating spacer 311, of which thickness is about 0.2 mm or more to reduce the resistance of the sample covering the reactive film 303, covers the conductive films 302. The channel trench of the insulating spacer 311 exposes one end of each electrode, which serves as a working electrode 310 and a reference electrode 309. The other exposed end of each electrode serves as a cathode lead 307 and an anode lead 308. The reactive region is confined in the channel trench.

In step (c) and Fig. 4B, the reagent of the reactive film 303 is formed by coating and then drying the solution on the reactive region of the channel trench. The reagent solution of the reactive film 303 contains an active species capable of undergoing redox reactions, and a mixed solution containing a polymer, an electron medium, a nonionic surfactant and a buffer solution. A feature of the present invention is the reagent solution of the reactive film 303 is a single mixed solution. Therefore, only one procedure is required to form the reactive film 303. There is no need of coating each component of the reactive region in multiple steps. The process of the electrochemical electrode test strip is thus advantageous in control and in mass-production to reduce the cost.

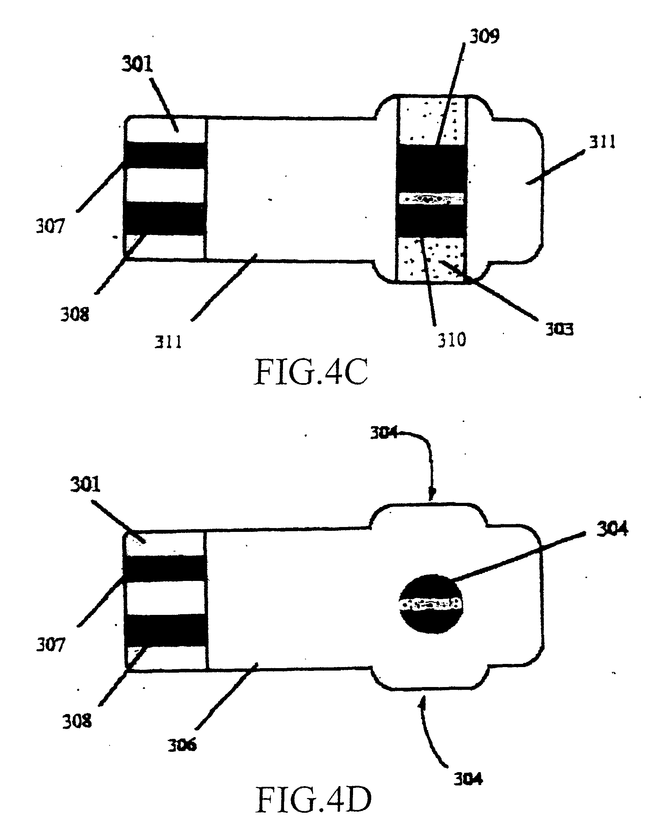

In step (d) and Fig. 4C, the channel trench is covered with a nitrate fiber film 312 to protect the reactive film 303. The thickness of the nitrate fiber film 312 is less than 0.15 mm. The nitrate fiber film 312 is hydrophilic so as to save the time for a sample completely covering the reactive film 303.

Referring to step (e) and Fig. 4D, a cover 306 with an opening 304, which exposes the reactive region, covers the insulating base plate 301. Besides, two openings 304, which are surrounded by the cover 306, spacer 311 and the base plate 301, are formed simultaneously on the two ends of the channel trench.

For providing a further understanding of the present invention, several embodiments are described below.

### Embodiment 1: An electrode test strip for glucose analysis

A halftone was used to print out two separate carbon-glue electrodes (i.e. conductive films 302) on a base plate 301, which is made of insulating PC. The two electrodes served as a cathode and an anode individually. A drying step was performed under a temperature of about 60 to about 80 °C to dry the carbon-glue. An insulating spacer 311 covered on the conductive film 302 next. The spacer 311 was used to form a reactive region, which was defined by a channel trench in the spacer 311 with a constant width. The exposed ends of the two electrodes individually served as a cathode lead 307, an anode lead 308, a reference electrode 309 and a working electrode 310.

A reagent solution was used to form a reactive film 303 on the reactive region in a way of drop-wise addition. The following are the compositions of this reagent solution:

| | |
|---|---|
| Glucose oxidase (270 U/mg) | 0.7 wt % |
| Carboxymethyl cellulose | 3 wt % |
| Potassium ferricyanide | 7 wt % |
| Triton X-100 | 0.08 wt % |
| Phosphate buffer (pH = 5.5; 0.1 M) | 89.22 wt % |

Then the reagent solution was dried under a temperature of about 45 °C. Consecutively, a nitrate fiber film 312 covered the channel trench. Next, the cover 306 with an opening 304 was put on the spacer 311 to finish manufacturing the electrochemical electrode test strip, in which the opening 304 was on the channel trench.

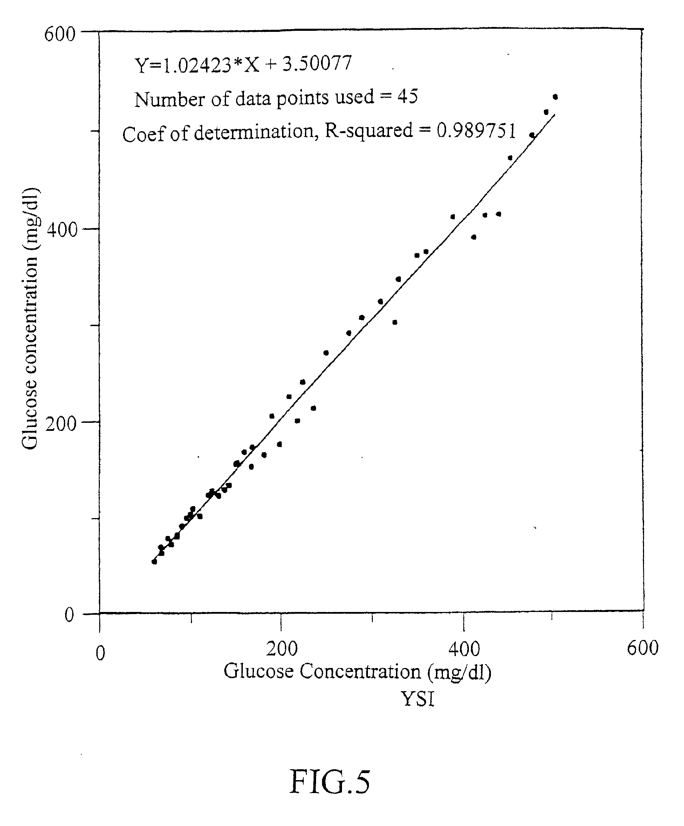

The electrochemical electrode test strip described above was tested to detect the glucose concentration of a blood sample. The result obtained was the same as the result of a biochemical instrument YSI 2300 shown in Fig. 5.

### Embodiment 2: An electrode test strip for glucose analysis

The steps performed in embodiment 1 were repeated with the compositions of this reagent solution as follows:

| | |
|---|---|
| Glucose oxidase (270 U/mg) | 0.6 wt % |
| Albumin | 1 wt % |
| Methyl cellulose | 2 wt % |
| Potassium ferricyanide | 6 wt % |
| Triton X-100 | 0.09 wt % |
| Phosphate buffer (pH = 5.5; 0.1 M) | 90.31 wt % |

### Embodiment 3: An electrode test strip for uric acid analysis

The steps performed in embodiment I were repeated with the compositions of this reagent solution as follows:

| | |
|---|---|
| Uricase (1000 U/g) | 1.5 wt % |
| Methyl cellulose | 2.5 wt % |
| Citric acid solution (0.1 M) | 45 wt % |
| Triton X-100 | 0.1 wt % |
| Phosphate buffer (pH = 8.5; 0.2 M) | 89.41 wt % |

### Embodiment 4: An electrode test strip for glucose analysis

The steps performed in embodiment 1 were repeated but with the following compositions of the reagent solution:

| | |
|---|---|
| Glucose oxidase (270 U/mg) | 0.8 wt % |
| Gelatin | 2 wt % |
| Albumin | 0.5 wt % |
| Potassium ferricyanide | 7.5 wt % |
| Triton X-100 | 0.09 wt % |
| Phosphate buffer (pH= 5.5; 0.1 M) | 89.11wt % |

### Embodiment 5: An electrode test strip for glucose analysis

The steps performed in embodiment I were repeated with the following compositions of the reagent solution:

| | |
|---|---|
| Glucose oxidase (270 U/mg) | 0.66 wt % |
| Albumin | 0.5 wt % |
| Polyvinyl pyrrolidone | 2 wt % |
| Potassium feiricyanide | 7 wt % |
| Triton X-100 | 0.12 w %t |
| Phosphate buffer (pH = 5.5; 0.1 M) | 89.53 wt % |

From above description, the features of this invention are summarized as follows:
1. Since a sample is loaded from one of the three openings into the reactive region of the electrochemical electrode test strip, the sample can be easily loaded into the reactive region in a much shorter time and can easily cover the reactive film completely.
2. A redox reaction subsequently occur between an analyte of a sample and the active species. Since the sample can easily cover the reactive film completely to produce larger redox current, an electrochemical instrument can easily detect the resulted current of the redox reaction and convert the signal to the analyte concentration. Therefore, the measurement errors can be largely reduced in this invention and the electrode test strip of this invention can be easily used in an electrochemical instrument.
3. The reagent solution of the reactive film is a single mixed solution. Hence, the reagent solution can be spread on the reactive region and dried at one time. This will save much time and cost needed for manufacturing the electrode test strip.
4. The electrode test strip of the present invention is disposable. Hence, there is no cross contamination resulting from different samples. This is especially important for the electrode test strips used in hospital.

It will be apparent to those skilled in the art that various modifications and variations can be made to the structure of the present invention without departing from the scope or spirit of the invention. In view of the foregoing, it is intended that the present invention covers modifications and variations of this invention provided they fall within the scope of the following claims and their equivalents.

## Claims

1. An electrode test strip for detecting an analyte concentration, comprising:
an insulating base plate;
an electrode system on a first surface of said insulating base plate, comprising at least one working electrode and one reference electrode, wherein said working electrode and the reference electrode are isolated;
a spacer partially covering the first surface of said insulating base plate and said electrode system to expose a first part of the electrode system, and a channel trench cross the spacer formed therein to expose second part of the electrode system;
a reactive film in said channel trench, containing at least one active species capable of a specific redox reaction with the analyte; and
a cover with a first opening on the spacer, wherein said first opening exposes said channel trench, and two second openings formed at the two ends of said channel trench.

2. The electrode test strip of claim 1, wherein said insulating base plate is selected from the group consisting of PC plate, polyvinylchloride plate, polyethyleneterephthalate plate, glass fibre plate (FR-4), bakelite ceramics, ceramic plate (CEM-I), glass plate and polyester sulfone plate.

3. The electrode strip of claim 1 or 2, wherein the area of said working electrodes is larger than that of said reference electrode.

4. The electrode test strip of claim 1, 2 or 3, wherein the material of said electrode system is selected from the group consisting of carbon glue, silver glue, gold glue, carbon-silver glue, cooper glue, carbon-platinum glue, and a combination thereof.

5. The electrode test strip of claim 1, 2, 3 or 4, wherein said reactive film contains a hydrophilic polymer.

6. The electrode test strip of claim 5, wherein said polymer is selected from the group consisting of Polyvinyl Pyrrolidone, Polyethylene Glycol, gelatin, dextran, polyvinyl alcohol, methylcellulose, carboxymethyl cellulose, albumin, chitin and a combination thereof.

7. The electrode test strip of any preceding claim, wherein said reactive film contains an electron medium.

8. The electrode test strip of claim 7, wherein said electron medium includes potassium ferricyanide.

9. The electrode test strip of any preceding claim, wherein said reactive film contains a nonionic surfactant.

10. The electrode test strip of claim 9, wherein said nonionic surfactant is selected from the group consisting of Triton X-100, lecithine, phosphatidyl choline, oleic acid, cyclodextrin, polyoxyethylene glycerine and fatty acid ester.

11. The electrode test strip of any preceding claim, wherein said reactive film contains a buffer solution.

12. The electrode test strip of claim 11, wherein said buffer reagent of the buffer solution is selected from the group consisting of citric acid, di-potassium phosphate, potassium phosphate, Tris and borate.

13. The electrode test strip of any preceding claim, wherein said active species includes an enzyme, a protein or a chemical.

14. The electrode test strip of claim 13, wherein said active species is secured in the reactive film.

15. The electrode test strip of any preceding claim, wherein the diameter of said first opening is equal to or larger then the width of channel trench.

16. The electrode test strip of any preceding claim, which further comprises a nitrate fiber film on said channel trench but beneath said first opening.

17. The electrode test strip of any preceding claim, wherein one of the first and second openings serves as a sample inlet, the other two openings serves as gas outlets.

18. A method of manufacturing an electrode test strip, comprising the steps of:
offering an insulating base plate;
printing a layer of conductive films as a cathode and an anode, which cathode and anode are isolated;
forming a first spacer and a second spacer on said conductive films to expose two ends of said cathode and anode, wherein a channel trench is formed between said first and second spacer;
coating a reagent solution on a bottom surface of said channel trench;
drying said reagent solution to form a reactive film in said channel trench; and
forming a cover with one first opening on the spacer, wherein said first opening is located on said channel trench and two second openings are surrounded by said insulating base plate, said first spacer, said second spacer and said cover.

19. The method of claim 18, wherein said reagent solution comprises an active species, a polymer, an electron medium, a nonionic surfactant and a buffer solution.

20. The method of claim 19, wherein said polymer is about 1 to 4 wt%.

21. The method of claim 19 or 20, wherein said polymer is selected from the group consisting of Polyvinyl Pyrrolidone, polyethylene Glycol, gelatin, dextran, polyvinylalcohol, methylcellulose, carboxymethyl cellulose, albumin, chitin and a combination thereof.

22. The method of claim 19, 20 or 21, wherein said electron medium is about 1 to 10 wt%.

23. The method of claim 19, 20, 21 or 22, wherein said electron medium includes potassium ferricyanide.

24. The method of any of claims 19 to 23, wherein said nonionic surfactant is less than about 0.3 wt%.

25. The method of any one of claims 19 to 24, wherein said nonionic surfactant is selected from the group consisting of Triton X-100, lecithine, phosphatidyl choline, oleic acid, cyclodextrin, polyoxyethylene glycerine and fatty acid ester.

26. The method of any one of claims 19 to 25, wherein said buffer solution is about 83.7 to 98 wt%.

27. The method of any one of claims 19 to 26, wherein said buffer reagent of the buffer solution is one selected from the group consisting of citric acid, di-potassium phosphate, potassium phosphate, Tris and borate.

28. The method of any one of claims 18 to 27, which, between the steps of drying the reagent solution and forming a cover, further comprises a step of covering a nitrate fiber film on said channel trench.
